# EUROPEAN PATENT SPECIFICATION

(11) **EP 3 735 026 B1**
(45) Date of publication and mention of the grant of the patent: **08.04.2026**
(21) Application number: 18905839.9
(22) Date of filing: 09.02.2018
(51) Int. Cl.: H04W 28/08

(54) **DATA TRANSMISSION METHOD BASED ON DIRECT LINK, DEVICE AND TERMINAL**
DATENÜBERTRAGUNGSVERFAHREN BASIEREND AUF EINER DIREKTEN VERBINDUNG, VORRICHTUNG UND ENDGERÄT
PROCÉDÉ DE TRANSMISSION DE DONNÉES BASÉ SUR UNE LIAISON DIRECTE, DISPOSITIF ET TERMINAL

(43) Date of publication of application: 04.11.2020
(73) Proprietor: HUAWEI TECHNOLOGIES CO., LTD., Shenzhen, Guangdong 518129 (CN)
(72) Inventor: LI, Mingchao, Shenzhen, Guangdong 518129 (CN); LIU, Hang, Shenzhen, Guangdong 518129 (CN); WANG, Hejun, Shenzhen, Guangdong 518129 (CN)
(74) Representative: Körber, Martin Hans
(86) International application number: PCT/CN2018/076071
(87) International publication number: WO 2019/153283

(56) References cited:
- EP-A1- 3 297 358
- WO-A1-2016/182292
- WO-A1-2017/137009
- CN-A- 103 338 497
- US-A1- 2017 238 321
- INTEL CORPORATION: "Remaining aspects of TX Carrier Selection for CA over PC5", vol. RAN WG2, no. Reno, USA; 20171127 - 20171201, 17 November 2017 (2017-11-17), XP051371552, Retrieved from the Internet <URL:http://www.3gpp.org/ftp/tsg%5Fran/WG2%5FRL2/TSGR2%5F100/Docs/> [retrieved on 20171117]
- OPPO: "Carrier selection in CA-based eV2x", vol. RAN WG2, no. Reno, USA; 20171127 - 20171201, 17 November 2017 (2017-11-17), XP051371336, Retrieved from the Internet <URL:http://www.3gpp.org/ftp/tsg%5Fran/WG2%5FRL2/TSGR2%5F100/Docs/> [retrieved on 20171117]
- HUAWEI ET AL: "Discussion on the Tx carrier selection for PC5 CA", 3GPP TSG-RAN WG2 MEETING#100 R2-1712751, 1 December 2017 (2017-12-01), XP051371654
- HUAWEI ET AL: "On UEs with limited Rx capability in PC5 CA", 3GPP TSG-RAN WG2 MEETING #100 R2-1712749, 1 December 2017 (2017-12-01), XP051371652
- ERICSSON: "Sidelink Carrier Selection Criteria for TX", 3GPP TSG-RAN WG2 #100 TDOC R2-1713516, 1 December 2017 (2017-12-01), XP051372215
- ERICSSON: "Sidelink Carrier Selection Criteria", 3GPP TSG-RAN WG2 #99BIS TDOC R2-1711493, 13 October 2017 (2017-10-13), XP051343465
- CATT: "Some consideration of Rx limitation", 3GPP TSG-RAN WG2 #100 R2-1712854, 1 December 2017 (2017-12-01), XP051371739

## Description

### TECHNICAL FIELD

This application relates to the field of network communications, and in particular, to a direct link-based data transmission method and apparatus, and a terminal.

### BACKGROUND

Direct communication means that terminals may directly communicate with each other through a direct link (also referred to as a sidelink (Sidelink)) between the terminals. To be specific, one terminal may directly send data to another terminal through the direct link between the terminal and the another terminal, without forwarding the data by using another network device (for example, a base station).

A direct communications technology has great advantages in terms of a transmission delay and the like, and is especially applicable to an internet of vehicles communications system. A cellular network-based V2X (Vehicle to X, vehicle to X, where X represents everything) direct communications technology is usually used in the internet of vehicles communications system. In the internet of vehicles communications system, a vehicle can obtain road condition information or receive an information service in a timely manner through V2X communication. V2X may generally include V2V (Vehicle to Vehicle, vehicle to vehicle) communication, V2I (Vehicle to Infrastructure, vehicle to infrastructure) communication, V2P (Vehicle to Pedestrian, vehicle to pedestrian) communication, and V2N (Vehicle to Network, vehicle to network) communication.

In the direct communication technology, a plurality of transmission carriers may be configured at a transmit end for transmitting direct link data. When the direct link data needs to be transmitted at the transmit end, one or more transmission carriers may be randomly selected from the plurality of transmission carriers for sending the direct link data. Consequently, data transmission performance is relatively poor.

EP 3 297 358 A1 discloses a method for a terminal for carrying out vehicle-to-everything (V2X) communication in wireless communication system and a terminal utilizing the method. The method is characterized by acquiring resource allocation information associated with V2X communication from a neighboring cell, and reporting the resource allocation information associated with V2X communication to the serving cell.

Another example of the prior art can be found in US2017/238321.

### SUMMARY

To resolve a problem that data transmission performance is relatively poor because a transmission carrier is randomly selected at a transmit end for transmitting direct link data, this application provides a direct link-based data transmission method and apparatus, and a terminal. The technical solutions are as follows:

The present invention is defined by a direct link-based data transmission method according to independent claim 1, a direct link-based data transmission apparatus according to independent claim 4, a terminal according to independent claim 6 and a computer-readable storage medium according to independent claim 7. Additional features of the invention are provided in the dependent claims.

### BRIEF DESCRIPTION OF DRAWINGS

FIG. 1A is a diagram of an application scenario according to an embodiment of the present invention;
FIG. 1B is a diagram of another application scenario according to an embodiment of the present invention;
FIG. 2 is a schematic structural diagram of hardware of a terminal according to an embodiment of the present invention.
FIG. 3 is a flowchart of a direct link-based data transmission method according to an embodiment of the present invention;
FIG. 4 is a flowchart of another direct link-based data transmission method according to an embodiment of the present invention;
FIG. 5 is a flowchart of still another direct link-based data transmission method according to an embodiment of the present invention; and
FIG. 6 is a schematic structural diagram of a direct link-based data transmission apparatus according to an embodiment of the present invention.

### DESCRIPTION OF EMBODIMENTS

To make the objectives, technical solutions, and advantages of this application clearer, the embodiments of this application are described below in further detail with reference to the accompanying drawings.

In this embodiment of the present invention, "A and/or B" indicates that there are three cases: A, B, and a combination of A and B.

An application scenario of an embodiment of the present invention is described below by using a V2V direct communication scenario as an example. This embodiment of the present invention is applicable to a V2V direct communication scenario with network coverage, and is also applicable to a V2V direct communication scenario without network coverage.

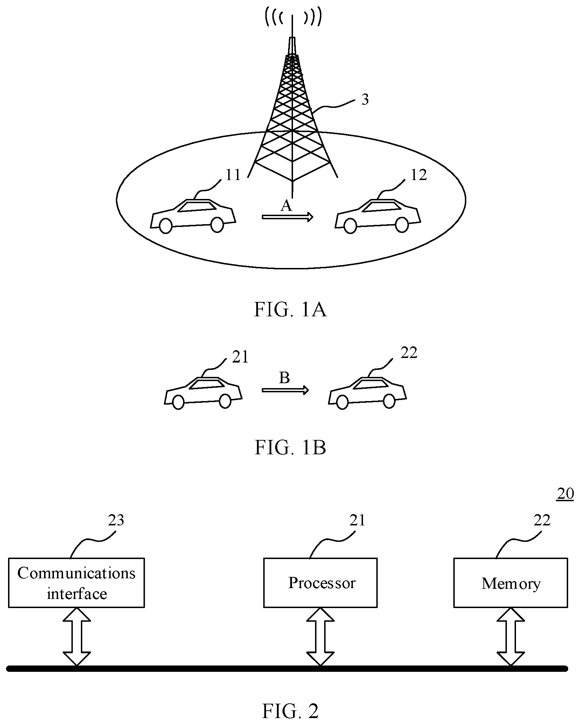

FIG. 1A shows V2V direct communication with network coverage. As shown in FIG. 1A, both a vehicle 11 and a vehicle 21 are within coverage of a base station 3. The base station may be a base station in an LTE (Long Term Evolution, long term evolution) communications system or a subsequent evolved system (for example, 4G or 5G) of the LTE communications system, for example, an eNB (evolved Node B, evolved NodeB). This is not limited in the present invention. The vehicle 11 and the vehicle 12 can communicate with the base station 3 based on a communications network provided by the base station 3, and the vehicle 11 and the vehicle 12 may further communicate with each other through a direct link A. The direct link A may be established by using a carrier configured by the base station 3.

FIG. 1B shows V2V direct communication without network coverage. As shown in FIG. 1B, when a vehicle 12 and a vehicle 22 are not within the network coverage, the vehicle 12 and the vehicle 22 may still communicate with each other through a direct link B, and the direct link B is established by using a pre-configured carrier.

It should be noted that, although V2V is used as an example in FIG. 1A and FIG. 1B, that is, the terminal is an in-vehicle terminal, certainly, the terminal may alternatively be a mobile terminal (for example, a mobile phone or a tablet computer), a terminal on a roadside facility, or the like. In other words, this embodiment of the present invention may be further applicable to another V2X direct communication scenario such as V2I, V2P, or V2N. In addition to the V2X direct communication scenario, this embodiment of the present invention may be further applicable to another direct communication scenario.

FIG. 2 is a schematic structural diagram of hardware of a terminal according to an embodiment of the present invention. As shown in FIG. 2, the terminal may include components such as a processor 21 with one or more cores, a memory 22 including one or more computer-readable storage media, and a communications interface 23. The processor 21 may be connected to the memory 22 and the communications interface 23 through a bus. A person skilled in the art may understand that the structure shown in FIG. 2 does not constitute any limitation on the terminal 20, and the terminal 20 may include more or fewer components than those shown in the figure, or some components may be combined, or different component arrangements may be used.

The processor 21 is a control center of the terminal 20, is connected to all parts of the entire terminal 20 through various interfaces and lines, and performs various functions of the terminal 20 and data processing by running or executing a software program stored in the memory 22 and invoking data stored in the memory 22. In this way, the terminal 20 is monitored as a whole. Optionally, the processor 21 may include one or more processing units. The processing unit may be a CPU (Central Processing Unit, central processing unit), an NP (Network Processor, network processor), or the like.

The memory 22 may be configured to store various data, for example, various configuration parameters and a computer instruction, and the computer instruction may be executed by the processor 21. The memory 22 may include a highspeed random access memory, and may further include a nonvolatile memory such as at least one magnetic disk or a flash memory, or another volatile solid-state storage device. Correspondingly, the memory 22 may further include a memory controller, to provide the processor 21 with access to the memory 22.

The communications interface 23 may be a transceiver or a network interface. The transceiver may include a receiver Rx and a transmitter Tx. The transceiver may further be implemented as a communications chip. The communications chip may include a receiving module, a transmitting module, a modulation and demodulation module, or the like, and is configured to: modulate and demodulate information, and receive or send the information by using a radio signal.

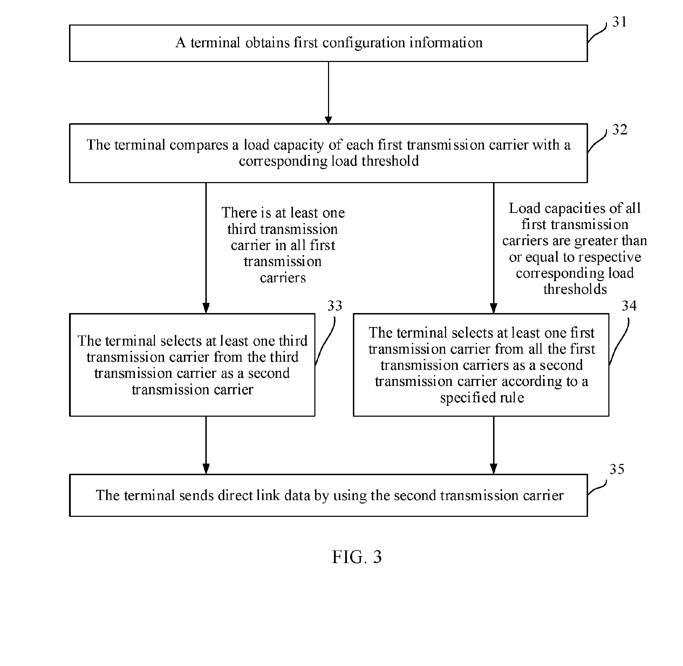

In this embodiment of this application, the processor 21 is configured to receive and send direct link data through the communications interface 23, and is configured to execute the instruction in the memory 22, to implement the steps that need to be performed by the terminal in FIG. 3 to FIG. 5.

To improve performance of data transmission between terminals in direct communication, an embodiment of the present invention provides a direct link-based data transmission method. FIG. 3 is a flowchart of the data transmission method. The method may be performed by the foregoing terminal. As shown in FIG. 3, the data transmission method may include the following steps.

Step 31: The terminal obtains first configuration information.

The first configuration information may include at least one carrier identifier and a load threshold corresponding to the at least one carrier identifier.

Optionally, the carrier identifier and the load threshold may be in a many-to-one relationship, that is, at least two carrier identifiers may correspond to a same load threshold. Alternatively, the carrier identifier and the load threshold may be in a one-to-one relationship, that is, each carrier identifier corresponds to one load threshold, and load thresholds corresponding to different carrier identifiers may be the same or may be different. Certainly, the correspondence between the carrier identifier and the load threshold may alternatively be a combination of a many-to-one relationship and a one-to-one relationship.

In this embodiment, the first configuration information in step 31 may be configured by a network. For example, the terminal may obtain the first configuration information by receiving a system message or RRC (Radio Resource Control, radio resource control) dedicated signaling sent by a base station. Alternatively, the first configuration information in step 31 may be pre-configured or specified in a protocol. In this case, the terminal may obtain the first configuration information by using pre-configured information or based on the protocol.

Step 32: The terminal compares a load capacity of each first transmission carrier with a corresponding load threshold, and performs step 33 when there is at least one third transmission carrier (that is, there is at least one first transmission carrier whose load capacity is less than the corresponding load threshold) in all the first transmission carriers; or performs step 34 when load capacities of all the first transmission carriers are greater than or equal to respective corresponding load thresholds.

Each first transmission carrier corresponds to one carrier identifier in the first configuration information. In other words, the first transmission carriers are all selected from transmission carriers corresponding to all the carrier identifiers in the first configuration information. In an implementation of this embodiment, the transmission carriers corresponding to all the carrier identifiers in the first configuration information are the first transmission carriers. However, in another implementation of this embodiment, the transmission carriers corresponding to some carrier identifiers in the first configuration information are the first transmission carriers. The third transmission carrier is a transmission carrier whose load capacity is less than a corresponding load threshold in the first transmission carriers.

Correspondingly, in the latter implementation, the method may further include:

The terminal obtains second configuration information, where the second configuration information includes at least one carrier identifier. The second configuration information may be configured by an upper-layer protocol layer of an access stratum of the terminal, indicating that data of an application needs to be transmitted by using a transmission carrier indicated by the carrier identifier in the second configuration information. The terminal determines the first transmission carriers based on the first configuration information and the second configuration information. For example, the first transmission carrier is a transmission carrier indicated by a same carrier identifier in the carrier identifiers in the first configuration information and the carrier identifiers in the second configuration information. For example, if carrier identifiers included in the first configuration information are F1, F2, and F3, and carrier identifiers included in the second configuration information are F1, F2, and F5, the first transmission carriers include transmission carriers indicated by the carrier identifiers F1 and F2.

It should be noted that when the first configuration information is obtained from the base station, the second configuration information may also be pre-configured or specified in a protocol.

Further, step 32 may include:
calculating the load capacity of each first transmission carrier; and
comparing, with the corresponding load threshold, the load capacity of the first transmission carrier that is obtained through calculation.

The load capacity may be a channel congestion level value, a channel congestion percentage, a resource load level value, a resource load percentage, a resource load capacity, or the like. This is not limited herein.

For example, the load capacity of a single first transmission carrier may be calculated in the following manner: The terminal measures and collects statistics about a total value of transmission resources occupied on the first transmission carrier in a specified time length, or a percentage of the total value of the occupied transmission resources in a value of all transmission resources, and the total value of the occupied transmission resources and/or the ratio are/is used as the load capacity.

The transmission resource is a time-frequency resource. The terminal may determine whether the time-frequency resource is occupied by performing energy detection on the time-frequency resource. For example, when it is detected that an energy value of a particular time-frequency resource exceeds a specified threshold, it indicates that the time-frequency resource is occupied.

Optionally, in an implementation of this embodiment of the present invention, the first configuration information may further include transmission resource pool configuration information corresponding to the at least one carrier identifier, and the transmission resource pool configuration information includes location information of a time-frequency resource block. In other words, a transmission resource corresponding to the transmission carrier indicated by the carrier identifier may further be specified in the first configuration information. In this case, the load capacity of the first transmission carrier is a load capacity of a transmission resource pool corresponding to the corresponding transmission resource pool configuration information. For example, for a transmission carrier whose carrier identifier is F1, corresponding transmission resource pool configuration information includes five time-frequency resource blocks, which are respectively F11, F12, F13, F14, and F15, indicating the first to fifth symbols on the transmission carrier, and in this case, the load capacity of the transmission carrier F1 is determined based on occupancy of the five time-frequency resource blocks.

Optionally, the first configuration information may further include a transmit power parameter corresponding to the load threshold. Correspondingly, step 32 may further include: The terminal compares the load capacity of each first transmission carrier with the corresponding load threshold, and performs step 33 when there is at least one third transmission carrier in all the first transmission carriers and a corresponding transmit power parameter is a dedicated value 1; or performs step 34 when the load capacities of all the first transmission carriers are greater than or equal to respective corresponding load thresholds.

Optionally, the first configuration information may further include a percentage parameter of resources that can be occupied corresponding to the load threshold. Correspondingly, step 32 may further include: The terminal compares the load capacity of each first transmission carrier with the corresponding load threshold, and performs step 33 when there is at least one third transmission carrier in all the first transmission carriers and a corresponding percentage parameter of resources that can be occupied is a dedicated value 2; or performs step 34 when the load capacities of all the first transmission carriers are greater than or equal to respective corresponding load thresholds.

Optionally, the first configuration information may further include a maximum available modulation and coding scheme index parameter and a minimum available modulation and coding scheme index parameter that correspond to the load threshold. Correspondingly, step 32 may further include: The terminal compares the load capacity of each first transmission carrier with the corresponding load threshold, and performs step 33 when there is at least one third transmission carrier in all the first transmission carriers and a corresponding maximum modulation and coding scheme index parameter is a dedicated value 3 and/or the maximum modulation and coding scheme index parameter is a dedicated value 4; or performs step 34 when the load capacities of all the first transmission carriers are greater than or equal to respective corresponding load thresholds.

The foregoing dedicated values 1 to 4 may be obtained through pre-configuration, network configuration, or specification in a protocol.

Step 33: The terminal selects at least one third transmission carrier from the third transmission carrier as a second transmission carrier.

The at least one third transmission carrier may be selected from the third transmission carrier in any one of the following manners: sequentially selecting, in ascending order of the load capacities, the at least one third transmission carrier as the second transmission carrier; or randomly selecting the at least one third transmission carrier as the second transmission carrier; or sequentially selecting, in descending order of the load capacities, the at least one third transmission carrier as the second transmission carrier. It should be noted that, in addition to the foregoing manners, the terminal may also select the second transmission carrier from the third transmission carrier according to another rule. This is not limited in this embodiment of the present invention.

Further, a quantity of second transmission carriers that need to be selected by the terminal may be obtained through network configuration, pre-configuration, or specification in a protocol, and there may be one or more second transmission carriers.

When K1 second transmission carriers need to be selected, and a quantity of third transmission carriers with a minimum (or maximum) load capacity exceeds K1, K1 third transmission carriers may be randomly selected as the second transmission carriers. Certainly, the second transmission carriers may alternatively be selected according to any rule other than the random selection, and K1 is an integer greater than 1. For example, if one second transmission carrier needs to be selected, and there are three third transmission carriers with a minimum load capacity (for example, the load capacities are all 0.5), one transmission carrier is randomly selected from the three third transmission carriers as the second transmission carrier.

In addition, it is assumed that there are K1 second transmission carriers that need to be selected by the terminal, and if a quantity N of third transmission carriers is less than K1, the terminal may select only N third transmission carriers as the second transmission carriers; or if the quantity N of third transmission carriers is greater than K1, the terminal may select K1 third transmission carriers as the second transmission carriers in the foregoing manner.

Step 34: The terminal selects at least one first transmission carrier from all the first transmission carriers as the second transmission carrier according to a specified rule.

For example, the specified rule may be any one of the following rules:
sequentially selecting, in ascending order of the load capacities, the at least one first transmission carrier as the second transmission carrier; or randomly selecting the at least one first transmission carrier as the second transmission carrier; or sequentially selecting, in descending order of the load capacities, the at least one first transmission carrier as the second transmission carrier. It should be noted that, in addition to the foregoing manners, the terminal may also select the second transmission carrier according to another rule. This is not limited in this embodiment of the present invention.

Further, a quantity of second transmission carriers that need to be selected by the terminal may be obtained through network configuration, pre-configuration, or specification in a protocol, and there may be one or more second transmission carriers. The obtaining through network configuration may be that the terminal obtains the second transmission carrier by receiving dedicated control signaling and/or system broadcast information sent by the base station.

When K2 second transmission carriers need to be selected, and a quantity of first transmission carriers with a minimum (or maximum) load capacity exceeds K2, K2 first transmission carriers may be randomly selected as the second transmission carriers. Certainly, the second transmission carriers may alternatively be selected according to any rule other than the random selection, and K2 is an integer greater than 1. For example, if one second transmission carrier needs to be selected, and there are three third transmission carriers with a maximum load capacity (for example, the load capacities are all 0.9), one transmission carrier is randomly selected from the three third transmission carriers as the second transmission carrier.

In addition, it is assumed that there are K2 second transmission carriers that need to be selected by the terminal, and if a quantity N of first transmission carriers is less than K2, the terminal may select only N first transmission carriers as the second transmission carriers; or if the quantity N of first transmission carriers is greater than K2, the terminal may select K2 first transmission carriers as the second transmission carriers in the foregoing manner.

During implementation, K1 may be equal or not equal to K2.

When the load capacities of all the first transmission carriers are greater than or equal to respective corresponding load thresholds, each terminal selects the second transmission load according to a same rule, so that transmission carriers at different transmit ends in a system converge to several same transmission carriers as much as possible, and therefore the receiving end only needs to simultaneously receive data on the several carriers, thereby reducing a requirement on a receiving capability of the terminal.

It should be noted that step 32 to step 34 are performed when the terminal is triggered to perform transmission carrier selection. An occasion when the terminal is triggered to perform the transmission carrier selection includes but is not limited to, for example, when the terminal needs to send the direct link data, or when the terminal needs to perform transmission resource selection, or when the terminal needs to perform transmission resource reselection. According to the foregoing step 32 to step 32, the at least one transmission carrier can be selected from the first transmission carriers as the second transmission carrier based on the load capacity of each first transmission carrier and the load threshold corresponding to the first transmission carrier.

Step 35: The terminal sends the direct link data by using the second transmission carrier.

The method shown in FIG. 3 is described below with reference to a specific example. The terminal obtains the first configuration information through configuration of the base station, and uses transmission carriers indicated by all carrier identifiers in the first configuration information as the first transmission carriers. The carrier identifiers and the load thresholds in the first configuration information are shown in the following Table 1.

**Table 1**

| Carrier identifier | Load threshold |
|---|---|
| F1 | 0.6 |
| F2 | 0.7 |
| F3 | 0.5 |

In one case, when the terminal is triggered to perform transmission carrier selection, and assuming that load capacities that are of transmission carriers indicated by the carrier identifiers F1, F2, and F3 and that are measured by the terminal are respectively 0.7, 0.4, and 0.3, the load capacities of the transmission carriers indicated by the carrier identifiers F2 and F3 are less than corresponding load thresholds, and the third transmission carriers include the transmission carriers indicated by the carrier identifiers F2 and F3. If the terminal needs to select a third transmission carrier with a minimum load capacity as the second transmission carrier, the terminal may select the transmission carrier indicated by the carrier identifier F3 as the second transmission carrier to transmit the direct link data.

In another case, when the terminal is triggered to perform transmission carrier selection, and assuming that load capacities that are of transmission carriers indicated by the carrier identifiers F1, F2, and F3 and that are measured by the terminal are respectively 0.7, 0.8, and 0.9, the load capacities of the transmission carriers indicated by all the carrier identifiers are greater than corresponding load thresholds. If the terminal needs to select a first transmission carrier with a minimum load capacity as the second transmission carrier, the terminal may select the transmission carrier indicated by the carrier identifier F1 as the second transmission carrier to transmit the direct link data.

It should be noted that, in an optional implementation, in this embodiment, the third transmission carrier is a transmission carrier whose load capacity is less than the corresponding load threshold in the first transmission carriers. In another embodiment, the third transmission carrier may alternatively be a transmission carrier whose load capacity is less than or equal to the corresponding load threshold in the first transmission carriers. In this case, correspondingly, step 34 needs to be performed when the load capacities of all the first transmission carriers are greater than respective corresponding load thresholds.

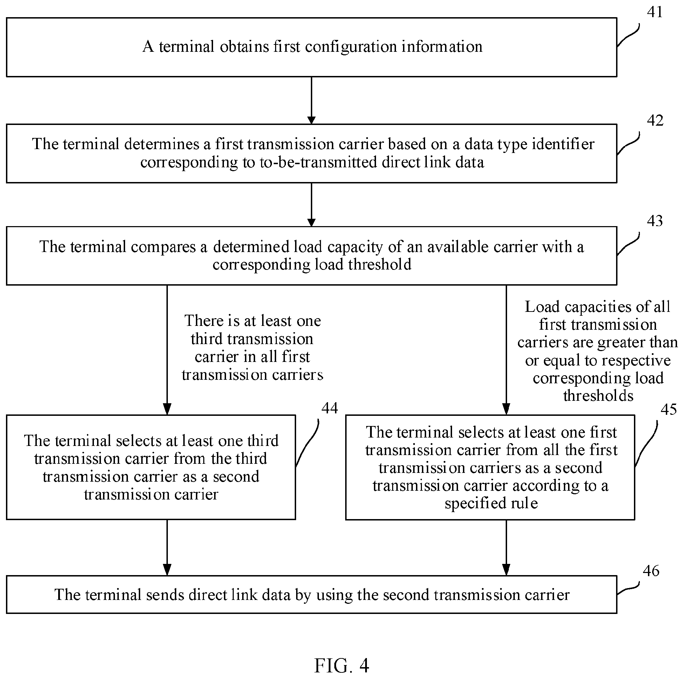

FIG. 4 shows another direct link-based data transmission method according to an embodiment of the present invention. A difference from the embodiment shown in FIG. 3 lies in that, in the embodiment shown in FIG. 4, the first configuration information further includes a data type identifier corresponding to a carrier identifier. As shown in FIG. 4, the data transmission method may include the following steps.

Step 41: The terminal obtains first configuration information.

The first configuration information may include at least one carrier identifier, and a load threshold and a data type identifier that correspond to the at least one carrier identifier. The data type identifier corresponding to the carrier identifier is used to indicate a type of data that can be transmitted by using the transmission carrier indicated by the carrier identifier, and the load threshold corresponding to the carrier identifier is a corresponding load threshold when the data of the data type is transmitted by using the transmission carrier indicated by the carrier identifier. When subsequently selecting the transmission carrier, the terminal needs to select the transmission carrier for to-be-transmitted direct link data based on a data type identifier corresponding to the to-be-transmitted direct link data. Specifically, the terminal selects the transmission carrier from the transmission carriers that have the data type identifier corresponding to the to-be-transmitted data based on a corresponding load threshold.

During implementation, the data type identifier may include at least one of the following identifiers: a PPPP (ProSe Per-Packet Priority, near field communication data packet priority) identifier, a QCI (QoS Class Identifier, quality of service class identifier), a service type identifier, a delay identifier, a reliability identifier, and a transmission rate identifier. The service type identifier includes but is not limited to a destination address, an ITS-AID (Intelligent Transport Systems-Application Identifier, intelligent transport systems-application service identifier), a PSID (Provider Service Identifier, provider service identifier), and an AID (Application Identifier, application service identifier).

Further, each carrier identifier may correspond to one or more types of data type identifiers. In other words, each transmission carrier may be used for transmitting data corresponding to the one or more types of data type identifiers. When one carrier identifier corresponds to one type of data type identifiers, the carrier identifier may further correspond to at least two data type identifiers in the type of data type identifiers. The PPPP identifier is used as an example below for description with reference to Table 2. As shown in Table 2, a PPPP identifier corresponding to a carrier identifier F1 is PPPP 1, PPPP identifiers corresponding to a carrier identifier F2 are PPPP 1 and PPPP 2, and PPPP identifiers corresponding to a carrier identifier F3 are PPPP 1 and PPPP 4. That is, in Table 2, each carrier identifier corresponds to a same type of data type identifier, the carrier identifier F1 corresponds to one PPPP identifier, and the carrier identifiers F2 and F3 each correspond to two PPPP identifiers.

**Table 2**

| Carrier identifier | Load threshold | PPPP identifier |
|---|---|---|
| F1 | 0.6 | PPPP 1 |
| F2 | 0.7 | PPPP 1, PPPP 2 |
| F3 | 0.5 | PPPP 1, PPPP 4 |

When a PPPP identifier of to-be-transmitted data is PPPP 1, the load threshold used to determine whether to select the transmission carrier F1 is 0.6, the load threshold used to determine whether to select the transmission carrier F2 is 0.7, and the load threshold used to determine whether to select the transmission carrier F3 is 0.5.

In addition, for a correspondence between the carrier identifier and the load threshold and a manner of obtaining the first configuration information, refer to step 31. Details are not described herein again.

Step 42: The terminal determines a first transmission carrier based on the data type identifier corresponding to the to-be-transmitted direct link data.

During implementation, an upper-layer application of the terminal transfers the to-be-sent direct link data and the corresponding data type identifier to the terminal. The terminal can determine, based on a correspondence between a data type identifier and a carrier identifier, the carrier identifier corresponding to the data type identifier, to determine a transmission carrier corresponding to the direct link data. The data type identifier may be included in a primitive corresponding to the direct link data.

In an implementation, the terminal uses transmission carriers corresponding to all the determined carrier identifiers as the first transmission carriers. In another implementation, the terminal uses transmission carriers corresponding to some carrier identifiers in the determined carrier identifiers as the first transmission carriers.

Correspondingly, in the latter implementation, the method may further include:
The terminal obtains second configuration information, and the second configuration information includes at least one carrier identifier and a data type identifier corresponding to the at least one carrier identifier. The second configuration information may be configured by an upper-layer protocol layer of an access stratum of the terminal, indicating that data that is of an application and that corresponds to the data type identifier needs to be transmitted by using a transmission carrier indicated by a carrier identifier corresponding to the data type identifier. The terminal determines the first transmission carriers based on the first configuration information and the second configuration information. For example, the first transmission carrier is a transmission carrier indicated by a same carrier identifier in carrier identifiers that are in the first configuration information and that correspond to the first data type identifiers and in carrier identifiers that are in the second configuration information and that correspond to the first data type identifiers, where the first data type identifier may be a data type identifier of current to-be-transmitted direct link data.

For example, if carrier identifiers corresponding to the data type identifier PPPP 1 in the first configuration information are F1, F2, and F3, and carrier identifiers corresponding to the data type identifier PPPP 1 in the second configuration information are F1, F2, and F5, the first transmission carrier is a transmission carrier whose carrier identifiers are F1 and F2.

Step 43: The terminal compares a load capacity of each first transmission carrier with a corresponding load threshold, and performs step 44 when there is at least one third transmission carrier in all the first transmission carriers; or performs step 45 when load capacities of all the first transmission carriers are greater than or equal to respective corresponding load thresholds.

The third transmission carrier is a transmission carrier whose load capacity is less than a corresponding load threshold in the first transmission carriers.

Further, for an implementation in which the terminal compares the load capacity of the first transmission carrier with the corresponding load threshold, refer to step 32. Details are not described herein again.

Step 44: The terminal selects at least one third transmission carrier from the third transmission carrier as a second transmission carrier.

For an implementation of step 44, refer to step 33. Detailed descriptions are omitted herein.

Step 45: The terminal selects at least one first transmission carrier from all the first transmission carriers as the second transmission carrier according to a specified rule.

For an implementation of step 45, refer to step 34. Detailed descriptions are omitted herein.

According to the foregoing step 42 to step 45, the at least one transmission carrier can be selected from all the first transmission carriers that have a data type identifier corresponding to the direct link data as the second transmission carrier.

Step 46: The terminal sends the direct link data by using the second transmission carrier.

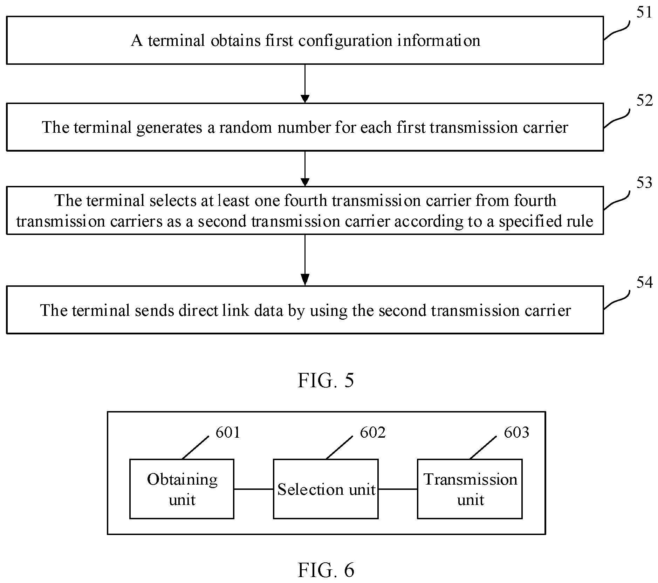

FIG. 5 shows another direct link-based data transmission method according to an embodiment of the present invention. A difference from the embodiment shown in FIG. 3 lies in that, in the embodiment shown in FIG. 5, the first configuration information further includes a probability threshold corresponding to each available carrier. As shown in FIG. 5, the method may include the following steps.

Step 51: The terminal obtains first configuration information.

The first configuration information includes at least one carrier identifier, and a load threshold and a probability threshold that correspond to the at least one carrier identifier. In this embodiment, the probability threshold is greater than 0 and less than 1.

Further, for the correspondence between the carrier identifier and the load threshold, refer to the foregoing step 31. Detailed descriptions are omitted herein. Similarly, the carrier identifier and the probability threshold may be in a many-to-one relationship, that is, probability thresholds corresponding to at least two carrier identifiers may be equal to each other. Alternatively, the carrier identifier and the probability threshold may alternatively be in a one-to-one relationship, that is, each carrier identifier corresponds to one probability threshold, and probability thresholds corresponding to different carrier identifiers may be the same or may be different. Certainly, the correspondence between the carrier identifier and the probability threshold may alternatively be a combination of a many-to-one relationship and a one-to-one relationship.

Optionally, the first configuration information may further include a data type identifier corresponding to the at least one carrier identifier. For a correspondence between the carrier identifier and the data type identifier and a related description of the data type identifier, refer to the foregoing step 41. Detailed descriptions are omitted herein.

Step 52: The terminal generates a random number for each first transmission carrier.

**In** step 52, for each first transmission carrier, a number may be randomly selected from an interval [0, 1] as a random number corresponding to the first transmission carrier.

For a manner of determining the first transmission carrier, refer to step 32 or step 42. Detailed descriptions are omitted herein.

Step 53: The terminal selects at least one fourth transmission carrier from fourth transmission carriers as a second transmission carrier according to a specified rule.

The fourth transmission carrier includes the first transmission carrier whose load capacity is less than or equal to the corresponding load threshold, and the first transmission carrier whose load capacity is greater than or equal to the corresponding load threshold and whose corresponding random number is less than or equal to the probability threshold; or the fourth transmission carrier includes the first transmission carrier whose load capacity is less than or equal to the corresponding load threshold, and the first transmission carrier whose load capacity is greater than or equal to the corresponding load threshold and whose corresponding random number is greater than or equal to the probability threshold.

For the specified rule, refer to the rule in which the first transmission carrier is selected from the first transmission carriers as the second transmission carrier in step 33. Details are not described herein again.

In addition to the first transmission carrier whose load capacity is less than or equal to the corresponding load threshold, the fourth transmission carrier further includes at least a part of first transmission carrier whose load capacity is greater than or equal to the corresponding load threshold, so that a selection range of transmission resources that can be used by the terminal to transmit direct link data can be increased. In this way, a probability that the terminal selects an idle resource to perform data transmission increases, thereby improving transmission performance.

It should be noted that step 52 and step 53 are performed when the terminal is triggered to perform transmission carrier selection.

Step 54: The terminal sends the direct link data by using the second transmission carrier.

An embodiment of the present invention further provides a direct link-based data transmission apparatus. The data transmission apparatus may be implemented as all or a part of the foregoing terminal by using a dedicated hardware circuit or a combination of software and hardware. Referring to FIG. 6, the data transmission apparatus includes an obtaining unit 601, a selection unit 602, and a transmission unit 603. The obtaining unit 601 is configured to obtain configuration information, where the configuration information includes at least one carrier identifier and a load threshold corresponding to the at least one carrier identifier. The selection unit 602 is configured to select, based on a load capacity of each first transmission carrier and the load threshold corresponding to the first transmission carrier, at least one transmission carrier from the first transmission carriers as a second transmission carrier, where each first transmission carrier corresponds to one carrier identifier. The transmission unit 603 is configured to transmit direct link data on the second transmission carrier selected by the selection unit 602.

Optionally, in an implementation, the selection unit 602 is configured to: when there is at least one third transmission carrier in the first transmission carriers, select at least one third transmission carrier from the third transmission carrier as the second transmission carrier, where the third transmission carrier is a transmission carrier whose load capacity is less than or equal to the corresponding load threshold in the first transmission carriers.

Further, the selection unit 602 is configured to sequentially select, in ascending order of load capacities, the at least one third transmission carrier as the second transmission carrier; or randomly select the at least one third transmission carrier as the second transmission carrier; or sequentially select, in descending order of load capacities, the at least one third transmission carrier as the second transmission carrier.

Optionally, the selection unit 602 is configured to: when the load capacities of the first transmission carriers are greater than or equal to respective corresponding load thresholds, sequentially select, in ascending order of the load capacities, the at least one transmission carrier from the first transmission carriers as the second transmission carrier; or when the load capacities of the first transmission carriers are greater than or equal to respective corresponding load thresholds, sequentially select, in descending order of the load capacities, the at least one transmission carrier from the first transmission carriers as the second transmission carrier; or when the load capacities of the first transmission carriers are greater than or equal to respective corresponding load thresholds, randomly select the at least one transmission carrier from the first transmission carriers as the second transmission carrier.

In another implementation, the configuration information further includes a probability threshold corresponding to the at least one carrier identifier. The selection unit 602 is configured to select at least one fourth transmission carrier from all fourth transmission carriers as the second transmission carrier, where the fourth transmission carrier includes the first transmission carrier whose load capacity is less than or equal to the corresponding load threshold, and the first transmission carrier whose load capacity is greater than or equal to the corresponding load threshold and whose corresponding random number is less than or equal to the probability threshold; or the fourth transmission carrier includes the first transmission carrier whose load capacity is less than or equal to the corresponding load threshold, and the first transmission carrier whose load capacity is greater than or equal to the corresponding load threshold and whose corresponding random number is greater than or equal to the probability threshold.

In still another implementation manner, the configuration information further includes a data type identifier corresponding to the at least one carrier identifier. The selection unit 602 is configured to select the at least one transmission carrier from all the first transmission carriers that have a data type identifier corresponding to the direct link data as the second transmission carrier.

Optionally, the configuration information further includes transmission resource pool configuration information corresponding to the at least one carrier identifier, the transmission resource pool configuration information includes location information of a time-frequency resource block, and the load capacity of the first transmission carrier is a load capacity of a transmission resource pool corresponding to the corresponding transmission resource pool configuration information.

For related details, refer to the method embodiments in FIG. 3 to FIG. 5.

It should be noted that the obtaining unit 601 may be implemented by a processor, or implemented by a processor in combination with a communications interface. The selection unit 602 may be implemented by a processor, or implemented by a processor executing a program instruction in a memory. The transmission unit 603 may be implemented by a communications interface, or implemented by a communications interface in combination with a processor.

It should be noted that when the data transmission apparatus provided in the foregoing embodiment performs data transmission, division of the foregoing functional modules is merely used as an example for description. In an actual application, the foregoing functions may be allocated to different functional modules for implementation according to a requirement, that is, an internal structure of the device is divided into different functional modules, to implement all or some of the functions described above. In addition, the data transmission apparatus provided in the foregoing embodiments and the data transmission method embodiment pertain to a same concept. For a specific implementation process of the data transmission apparatus, refer to the method embodiments. Details are not repeatedly described herein.

All or some of the foregoing embodiments may be implemented by using software, hardware, or a combination thereof. When a software program is used to implement the embodiments, all or some of the embodiments may be implemented in a form of a computer program product. The computer program product includes one or more computer instructions. When the computer instructions are loaded and executed on a computer, the procedures or functions according to the embodiments of the present invention are all or partially generated. The computer may be a general-purpose computer, a special-purpose computer, a computer network, or another programmable apparatus. The computer instruction may be stored in a computer-readable storage medium, or transmitted from a computer-readable storage medium to another computer-readable storage medium. For example, the computer instruction may be transmitted from a website, computer, server, or data center to another website, computer, server, or data center in a wired (for example, a coaxial cable, a twisted pair, or an optical fiber) or wireless (for example, infrared or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive (SSD)), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, or an optical disc.

## Claims

1. A direct link-based data transmission method, wherein the data transmission method comprises:
obtaining (31, 51) configuration information, wherein the configuration information comprises at least one carrier identifier and a load threshold corresponding to the at least one carrier identifier;
selecting (32, 33, 34), based on a load capacity of each of a plurality of first transmission carriers and the load threshold corresponding to each of the plurality of first transmission carriers, at least one transmission carrier from all the first transmission carriers as a second transmission carrier, wherein each of the plurality of first transmission carriers is configured to transmit direct link data and corresponds to one of the at least one carrier identifier in the configuration information; and
transmitting (35, 54) direct link data on the second transmission carrier,
wherein the configuration information further comprises a preset probability threshold corresponding to the at least one carrier identifier,
wherein a random number corresponding to each first transmission carrier is generated (52) by the terminal for each first transmission carrier, and
wherein the at least one transmission carrier comprises one of the first transmission carriers whose load capacity is less than or equal to the corresponding load threshold, and another one of the first transmission carriers whose load capacity is greater than or equal to the corresponding load threshold and whose corresponding random number is less than or equal to the probability threshold; **or**
wherein the at least one transmission carrier comprises one of the first transmission carriers whose load capacity is less than or equal to the corresponding load threshold, and another one of the first transmission carriers whose load capacity is greater than or equal to the corresponding load threshold and whose corresponding random number is greater than or equal to the probability threshold.

2. The data transmission method according to claim 1, wherein the configuration information further comprises a data type identifier corresponding to the at least one carrier identifier; and
the selecting, based on a load capacity of each first transmission carrier and the load threshold corresponding to the first transmission carrier, at least one transmission carrier from all the first transmission carriers as a second transmission carrier comprises:
selecting (42) the at least one transmission carrier from all the first transmission carriers that have a data type identifier corresponding to the direct link data as the second transmission carrier.

3. The data transmission method according to any one of claims 1 to 2, wherein the configuration information further comprises transmission resource pool configuration information corresponding to the at least one carrier identifier, the transmission resource pool configuration information comprises location information of a time-frequency resource block, and the load capacity of the first transmission carrier is a load capacity of a transmission resource pool corresponding to the corresponding transmission resource pool configuration information.

4. A direct link-based data transmission apparatus, wherein the data transmission apparatus comprises:
an obtaining unit (601), configured to obtain configuration information, wherein the configuration information comprises at least one carrier identifier and a load threshold corresponding to the at least one carrier identifier;
a selection unit (602), configured to select, based on a load capacity of each of a plurality of first transmission carriers and the load threshold corresponding to each of the plurality of first transmission carriers, at least one transmission carrier from all the first transmission carriers as a second transmission carrier, wherein each of the plurality of first transmission carriers is configured to transmit direct link data and corresponds to one of the at least one carrier identifier in the configuration information; and
a transmission unit (603), configured to transmit direct link data on the second transmission carrier selected by the selection unit,
wherein the configuration information further comprises a preset probability threshold corresponding to the at least one carrier identifier,
wherein a random number corresponding to each first transmission carrier is generated (52) by the terminal for each first transmission carrier, and
wherein the at least one transmission carrier comprises one of the first transmission carriers whose load capacity is less than or equal to the corresponding load threshold, and another one of the first transmission carrier whose load capacity is greater than or equal to the corresponding load threshold and whose corresponding random number is less than or equal to the probability threshold; **or**
wherein the at least one transmission carrier comprises one of the first transmission carriers whose load capacity is less than or equal to the corresponding load threshold, and another one of the first transmission carriers whose load capacity is greater than or equal to the corresponding load threshold and whose corresponding random number is greater than or equal to the probability threshold.

5. The data transmission apparatus according to claim 4, wherein the configuration information further comprises transmission resource pool configuration information corresponding to the at least one carrier identifier, the transmission resource pool configuration information comprises location information of a time-frequency resource block, and the load capacity of the first transmission carrier is a load capacity of a transmission resource pool corresponding to the corresponding transmission resource pool configuration information.

6. A terminal, wherein the terminal comprises a memory and a processor connected to the memory, the memory is configured to store program code, and when the processor is configured to run or execute the program code stored in the memory, the terminal performs the method according to any one of claims 1 to 3.

7. A computer-readable storage medium, wherein the computer-readable storage medium stores an instruction, and when the computer-readable storage medium is run on a computer, the computer is enabled to perform the method according to any one of claims 1 to 3.

## Patentansprüche

1. Datenübertragungsverfahren basierend auf einer direkten Verbindung, wobei das Datenübertragungsverfahren Folgendes umfasst:
Erlangen (31, 51) von Konfigurationsinformationen, wobei die Konfigurationsinformationen mindestens eine Trägerkennung und einen Lastschwellenwert umfassen, der mit der mindestens einen Trägerkennung korrespondiert;
Auswählen (32, 33, 34), basierend auf einer Lastkapazität von jedem einer Vielzahl von ersten Übertragungsträgern und dem Lastschwellenwert, der mit jedem der Vielzahl von ersten Übertragungsträgern korrespondiert, mindestens eines Übertragungsträgers aus allen ersten Übertragungsträgern als zweiten Übertragungsträger, wobei jeder der Vielzahl von ersten Übertragungsträgern konfiguriert ist, um Direktverbindungsdaten zu übertragen und mit einer der mindestens einen Trägerkennung in den Konfigurationsinformationen zu korrespondieren; und
Übertragen (35, 54) von Direktverbindungsdaten auf den zweiten Übertragungsträger,
wobei die Konfigurationsinformationen ferner einen voreingestellten Wahrscheinlichkeitsschwellenwert umfassen, der mit der mindestens einen Trägerkennung korrespondiert,
wobei eine Zufallszahl, die mit jedem ersten Übertragungsträger korrespondiert, von dem Endgerät für jeden ersten Übertragungsträger generiert wird (52), und
wobei der mindestens eine Übertragungsträger einen der ersten Übertragungsträger umfasst, dessen Lastkapazität kleiner oder gleich dem korrespondierenden Lastschwellenwert ist, und einen weiteren der ersten Übertragungsträger, dessen Lastkapazität größer oder gleich dem korrespondierenden Lastschwellenwert ist und dessen korrespondierende Zufallszahl kleiner oder gleich dem Wahrscheinlichkeitsschwellenwert ist; **oder**
wobei der mindestens eine Übertragungsträger einen der ersten Übertragungsträger umfasst, dessen Lastkapazität kleiner oder gleich dem korrespondierenden Lastschwellenwert ist, und einen weiteren der ersten Übertragungsträger, dessen Lastkapazität größer oder gleich dem korrespondierenden Lastschwellenwert ist und dessen korrespondierende Zufallszahl größer oder gleich dem Wahrscheinlichkeitsschwellenwert ist.

2. Datenübertragungsverfahren nach Anspruch 1, wobei die Konfigurationsinformationen ferner eine Datentypkennung umfassen, die mit der mindestens einen Trägerkennung korrespondiert; und
Auswählen, basierend auf einer Lastkapazität jedes ersten Übertragungsträgers und dem Lastschwellenwert, der mit dem ersten Übertragungsträger korrespondiert, mindestens eines Übertragungsträgers aus allen ersten Übertragungsträgern als zweiten Übertragungsträger Folgendes umfasst:
Auswählen (42) des mindestens einen Übertragungsträgers aus allen ersten Übertragungsträgern, die eine Datentypkennung aufweisen, die mit den Direktverbindungsdaten als zweiten Übertragungsträger korrespondieren.

3. Datenübertragungsverfahren nach einem der Ansprüche 1 bis 2, wobei die Konfigurationsinformationen ferner Übertragungsressourcenpool-Konfigurationsinformationen umfassen, die mit der mindestens einen Trägerkennung korrespondieren, wobei die Übertragungsressourcenpool-Konfigurationsinformationen Standortinformationen eines Zeit-Frequenz-Ressourcenblocks umfassen und die Lastkapazität des ersten Übertragungsträgers eine Lastkapazität eines Übertragungsressourcenpools ist, der mit den korrespondierenden Übertragungsressourcenpool-Konfigurationsinformationen korrespondiert.

4. Datenübertragungsvorrichtung basierend auf einer direkten Verbindung, wobei die Datenübertragungsvorrichtung Folgendes umfasst:
eine Erlangungseinheit (601), konfiguriert, um Konfigurationsinformationen zu erlangen, wobei die Konfigurationsinformationen mindestens eine Trägerkennung und
einen Lastschwellenwert umfassen, die mit der mindestens einen Trägerkennung korrespondieren;
eine Auswahleinheit (602), konfiguriert, um basierend auf einer Lastkapazität jedes einer Vielzahl von ersten Übertragungsträgern und dem Lastschwellenwert, der mit jedem der Vielzahl von ersten Übertragungsträgern korrespondiert, mindestens einen Übertragungsträger aus allen ersten Übertragungsträgern als zweiten Übertragungsträger auszuwählen, wobei jeder der Vielzahl von ersten Übertragungsträgern konfiguriert ist, um Direktverbindungsdaten zu übertragen und mit einer der mindestens einen Trägerkennung in den Konfigurationsinformationen zu korrespondieren; und
eine Übertragungseinheit (603), konfiguriert, um Direktverbindungsdaten auf dem von der Auswahleinheit ausgewählten zweiten Übertragungsträger zu übertragen,
wobei die Konfigurationsinformationen ferner einen voreingestellten Wahrscheinlichkeitsschwellenwert umfassen, der mit der mindestens einen Trägerkennung korrespondiert,
wobei eine Zufallszahl, die mit jedem ersten Übertragungsträger korrespondiert, von dem Endgerät für jeden ersten Übertragungsträger generiert wird (52), und
wobei der mindestens eine Übertragungsträger einen der ersten Übertragungsträger umfasst, dessen Lastkapazität kleiner oder gleich dem korrespondierenden Lastschwellenwert ist, und einen weiteren der ersten Übertragungsträger, dessen Lastkapazität größer oder gleich dem korrespondierenden Lastschwellenwert ist und dessen korrespondierende Zufallszahl kleiner oder gleich dem Wahrscheinlichkeitsschwellenwert ist; **oder**
wobei der mindestens eine Übertragungsträger einen der ersten Übertragungsträger umfasst, dessen Lastkapazität kleiner oder gleich dem korrespondierenden Lastschwellenwert ist, und einen weiteren der ersten Übertragungsträger, dessen Lastkapazität größer oder gleich dem korrespondierenden Lastschwellenwert ist und dessen korrespondierende Zufallszahl größer oder gleich dem Wahrscheinlichkeitsschwellenwert ist.

5. Datenübertragungsvorrichtung nach Anspruch 4, wobei die Konfigurationsinformationen ferner Übertragungsressourcenpool-Konfigurationsinformationen umfassen, die mit der mindestens einen Trägerkennung korrespondieren, wobei die Übertragungsressourcenpool-Konfigurationsinformationen Standortinformationen eines Zeit-Frequenz-Ressourcenblocks umfassen und die Lastkapazität des ersten Übertragungsträgers eine Lastkapazität eines Übertragungsressourcenpools ist, der mit den korrespondierenden Übertragungsressourcenpool-Konfigurationsinformationen korrespondiert.

6. Endgerät, wobei das Endgerät einen Speicher und einen mit dem Speicher verbundenen Prozessor umfasst, wobei der Speicher konfiguriert ist, um Programmcode zu speichern, und wenn der Prozessor konfiguriert ist, um den in dem Speicher gespeicherten Programmcode auszuführen, das Endgerät das Verfahren nach einem der Ansprüche 1 bis 3 durchführt.

7. Computerlesbares Speichermedium, wobei das computerlesbare Speichermedium eine Anweisung speichert und wenn das computerlesbare Speichermedium auf einem Computer betrieben wird, der Computer in die Lage versetzt wird, das Verfahren nach einem der Ansprüche 1 bis 3 durchzuführen.

## Revendications

1. Procédé de transmission de données basé sur une liaison directe, dans lequel le procédé de transmission de données comprend :
l'obtention (31, 51) d'informations de configuration, dans lequel les informations de configuration comprennent au moins un identifiant de porteuse et un seuil de charge correspondant à l'au moins un identifiant de porteuse ;
la sélection (32, 33, 34), sur la base d'une capacité de charge de chacune d'une pluralité de premières porteuses de transmission et du seuil de charge correspondant à chacune de la pluralité de premières porteuses de transmission, d'au moins une porteuse de transmission parmi toutes les premières porteuses de transmission comme seconde porteuse de transmission, dans lequel chacune de la pluralité de premières porteuses de transmission est configurée pour transmettre des données de liaison directe et correspond à l'un de l'au moins un identifiant de porteuse dans les informations de configuration ; et
la transmission (35, 54) de données de liaison directe sur la seconde porteuse de transmission,
dans lequel les informations de configuration comprennent également un seuil de probabilité prédéfini correspondant à l'au moins un identifiant de porteuse,
dans lequel un nombre aléatoire correspondant à chaque première porteuse de transmission est généré (52) par le terminal pour chaque première porteuse de transmission, et
dans lequel l'au moins une porteuse de transmission comprend l'une des premières porteuses de transmission dont la capacité de charge est inférieure ou égale au seuil de charge correspondant, et une autre des premières porteuses de transmission dont la capacité de charge est supérieure ou égale au seuil de charge correspondant et dont le nombre aléatoire correspondant est inférieur ou égal au seuil de probabilité ; **ou**
dans lequel l'au moins une porteuse de transmission comprend l'une des premières porteuses de transmission dont la capacité de charge est inférieure ou égale au seuil de charge correspondant, et une autre des premières porteuses de transmission dont la capacité de charge est supérieure ou égale au seuil de charge correspondant et dont le nombre aléatoire correspondant est supérieur ou égal au seuil de probabilité.

2. Procédé de transmission de données selon la revendication 1, dans lequel les informations de configuration comprennent également un identifiant de type de données correspondant à l'au moins un identifiant de porteuse ; et
la sélection, sur la base d'une capacité de charge de chaque première porteuse de transmission et du seuil de charge correspondant à la première porteuse de transmission, d'au moins une porteuse de transmission parmi toutes les premières porteuses de transmission comme seconde porteuse de transmission comprend :
la sélection (42) de l'au moins une porteuse de transmission parmi toutes les premières porteuses de transmission qui ont un identifiant de type de données correspondant aux données de liaison directe comme seconde porteuse de transmission.

3. Procédé de transmission de données selon l'une quelconque des revendications 1 et 2, dans lequel les informations de configuration comprennent également des informations de configuration de groupe de ressources de transmission correspondant à l'au moins un identifiant de porteuse, les informations de configuration de groupe de ressources de transmission comprennent des informations de localisation d'un bloc de ressources temps-fréquence, et la capacité de charge de la première porteuse de transmission est une capacité de charge d'un groupe de ressources de transmission correspondant aux informations de configuration de groupe de ressources de transmission correspondantes.

4. Appareil de transmission de données basé sur une liaison directe, dans lequel l'appareil de transmission de données comprend :
une unité d'obtention (601), configurée pour obtenir des informations de configuration, dans lequel les informations de configuration comprennent au moins un identifiant de porteuse et un seuil de charge correspondant à l'au moins un identifiant de porteuse ;
une unité de sélection (602), configurée pour sélectionner, sur la base d'une capacité de charge de chacune d'une pluralité de premières porteuses de transmission et du seuil de charge correspondant à chacune de la pluralité de premières porteuses de transmission, au moins une porteuse de transmission parmi toutes les premières porteuses de transmission comme seconde porteuse de transmission, dans lequel chacune de la pluralité de premières porteuses de transmission est configurée pour transmettre des données de liaison directe et correspond à l'un de l'au moins un identifiant de porteuse dans les informations de configuration ; et
une unité de transmission (603), configurée pour transmettre des données de liaison directe sur la seconde porteuse de transmission sélectionnée par l'unité de sélection,
dans lequel les informations de configuration comprennent également un seuil de probabilité prédéfini correspondant à l'au moins un identifiant de porteuse,
dans lequel un nombre aléatoire correspondant à chaque première porteuse de transmission est généré (52) par le terminal pour chaque première porteuse de transmission, et
dans lequel l'au moins une porteuse de transmission comprend l'une des premières porteuses de transmission dont la capacité de charge est inférieure ou égale au seuil de charge correspondant, et une autre de la première porteuse de transmission dont la capacité de charge est supérieure ou égale au seuil de charge correspondant et dont le nombre aléatoire correspondant est inférieur ou égal au seuil de probabilité ; **ou**
dans lequel l'au moins une porteuse de transmission comprend l'une des premières porteuses de transmission dont la capacité de charge est inférieure ou égale au seuil de charge correspondant, et une autre des premières porteuses de transmission dont la capacité de charge est supérieure ou égale au seuil de charge correspondant et dont le nombre aléatoire correspondant est supérieur ou égal au seuil de probabilité.

5. Appareil de transmission de données selon la revendication 4, dans lequel les informations de configuration comprennent également des informations de configuration de groupe de ressources de transmission correspondant à l'au moins un identifiant de porteuse, les informations de configuration de groupe de ressources de transmission comprennent des informations de localisation d'un bloc de ressources temps-fréquence, et la capacité de charge de la première porteuse de transmission est une capacité de charge d'un groupe de ressources de transmission correspondant aux informations de configuration de groupe de ressources de transmission correspondantes.

6. Terminal, dans lequel le terminal comprend une mémoire et un processeur connecté à la mémoire, la mémoire est configurée pour stocker un code de programme, et lorsque le processeur est configuré pour faire fonctionner ou exécuter le code de programme stocké dans la mémoire, le terminal réalise le procédé selon l'une quelconque des revendications 1 à 3.

7. Support de stockage lisible par ordinateur, dans lequel le support de stockage lisible par ordinateur stocke une instruction, et lorsque le support de stockage lisible par ordinateur fonctionne sur un ordinateur, l'ordinateur est activé pour réaliser le procédé selon l'une quelconque des revendications 1 à 3.
